# EUROPEAN PATENT APPLICATION

(11) **EP 2 050 333 A2**
(43) Date of publication of application: **22.04.2009**
(21) Application number: 08075795.8
(22) Date of filing: 01.10.2008
(51) Int. Cl.: A01K 1/02

(54) **Farrowing device for a sow with piglets**

(30) Priority: 16.10.2007 NL 1034528
(71) Applicant: Nooyen Roosters B.V., 5753 AH Deurne (NL)
(72) Inventor: Nooijen, Antonius Maria Aloysius, 3941 Hechtel-Eksel (BE)
(74) Representative: Dorna, Peter

(57) **Abstract**

The present invention relates to a farrowing device for a sow with piglets, comprising a first stationary floor (7) for piglets and a second floor (5) for a sow, which second floor is movable between a lower position and an upper position, in which lower position the second floor is in line with the first floor, said first stationary floor comprising a first floor part (9) on a first longitudinal side of the second floor and a second floor part (10) on a second longitudinal side opposite said first longitudinal side, first partition means at the circumference of the farrowing device, above the first floor, and second partition means at the circumference of the second floor, above the second floor, wherein the first floor part and the second floor part are separate parts, wherein the second floor, upon movement from the lower position to the upper position, pushes off both against the first floor part and against the second floor part.

## Description

The present invention relates to a farrowing device for a sow with piglets, comprising a first stationary floor for piglets and a second floor for a sow, which second floor is movable between a lower position and an upper position, in which lower position the second floor is in line with the first floor, said first stationary floor comprising a first floor part on a first longitudinal side of the second floor and a second floor part on a second longitudinal side opposite said first longitudinal side, first partition means at the circumference of the farrowing device, above the first floor, and second partition means at the circumference of the second floor, above the second floor.

Such a farrowing device is known from GB-A-2 026 832. Said document describes a farrowing device in which the sow is present in a cage which is vertically movable between a lower position and an upper position by means of a pneumatic cylinder disposed above said cage. The object of this is to prevent piglets from being laid on by the sow, i.e. being crushed between the sow and the floor for the sow when the sow lies down. The farrowing device described in GB-A-2 026 832 is much too expensive for use in an economically sound manner by pig farmers.

A considerable improvement in that regard is the farrowing device that is described in NL-C-1016397, which comprises a stationary floor for a sow, with vertically movable floor parts for piglets disposed on either side thereof. In the meantime tens of thousands of such farrowing devices have been installed, and very good results have been obtained as regards preventing piglets from being laid on. In spite of these good results, the price/investment involved in the purchase and installation of such farrowing devices still makes some pig farmers hesitate about using such farrowing devices, although the additional investment involved is absolutely justified, certainly in the longer run, because of the higher percentage of piglets that survive the farrowing period.

The object of the present invention is to provide a farrowing device as referred to in the introduction, which is available to pig farmers at an even lower price than farrowing devices according to NL-C-1016397. In order to accomplish that object, the farrowing device according to the invention is characterised in that the first floor part and the second floor part are separate parts, wherein the second floor, upon movement from the lower position to the upper position, pushes off both against the first floor part and against the second floor part. The present invention is based inter alia on the inventive perception that in order to further reduce the price it is advantageous to revert to the situation in which the floor for the sow rather than the floor for the piglets is vertically movable. The fact is that this leads to the important advantage that there is no need to construct the area where the farrowing device joins the environment, for example formed by an upright wall of a pig house or a fence, at the location of the floor parts for the piglets, with such a degree of precision that it will continue to closely abut against the floor parts during vertical movement of said floor parts. In addition, a possibility is provided of having the floor for the sow form part of a standard part of the farrowing device with fixed dimensions, so that the floor for the sow, including the means for moving the floor in question up and down, can be produced in large numbers at a comparatively low price. The floor parts for the piglets located at the outer side of the floor for the sow can then be made to measure, adapted to the environment in which the farrowing device is to be installed in a pig house. Add to this the fact that the fencing elements can be made lower (and thus less expensive) at (part of) the circumference of the farrowing device, insofar as it abuts the floor for the piglets, than corresponding fencing elements used with the farrowing device according to NL-C-1016397, along which the floor parts for the piglets move up and down and which must have a specified minimum height above the level of the floor for the piglets, not only in the lower position of the movable floor parts but also in the upper position thereof. The invention makes it possible to use conventional partition means having a limited height. In addition to that, the installation of the farrowing device can be significantly simplified in the case of farrowing devices according to the invention, because of the fact that separate first floor parts and second floor parts are used, which can be installed separately from each other for a larger number of farrowing devices in a pig house as used in larger numbers in practice, after which the vertically movable second floors associated with the various farrowing devices can be connected to the associated first floor parts and second floor parts, so that the second floor can push off both against the first floor part and against the second floor part upon movement from the lower position to the upper position. Also the storage and further logistic aspects associated with the various parts of the farrowing device according to the invention can be realised at lower cost than in the case of farrowing devices according to the prior art.

Preferably, the first floor part and/or the second floor part is/are rectangular in shape. Floor parts having such a shape can be produced at relatively low cost and, in addition, they are easy to manipulate, store and transport.

Furthermore preferably, the first floor part and the second floor part have the same length but different widths. Thus, a relatively narrow floor part for the piglets and a relatively wide floor part for the piglets are located on opposite longitudinal sides of the second floor. In this way it remains possible for the piglets to approach the sow from either side, depending on which side the sow is lying, whilst one of the two floor parts can be utilised for making additional provisions, for example for keeping the piglets warm.

A considerable further cost reduction can be achieved if the first floor part and/or the second floor part form part of an integral floor part, of which also a first floor part and/or a second-floor part associated with an adjacent farrowing device forms part.

Preferably, a partition forming part of the first partition means is provided above the centre of the width of the integral floor part for separating the farrowing device and the adjacent farrowing device from each other. Precisely the fact that it is not the floor parts for the piglets but the floor for the sow that is vertically movable has made it possible to realise this preferred embodiment.

In order to keep the piglets warm, the first floor part or the second-floor part is preferably provided with heating means for heating part of the surface of either the first or the second floor part. A further cost reduction is achieved by providing only one floor part with such heating means.

Such heating means preferably comprise a heating pipe on the underside of the first floor part or the second floor part in question, which heating pipe, in case an integral floor part according to a preferred embodiment as discussed in the foregoing is used, also extends under the underside of the first floor part or a second floor part associated with the adjacent farrowing device. Thus, also the costs for the heating means for each farrowing device are reduced, for example in that less heating pipe length is needed and, in addition, fewer connections to the heating pipe are needed.

The second partition means are preferably jointly movable between said lower position and said upper position with the second-floor. In spite of the fact that the second-floor can move up and down, it is thus not necessary to make the second partition means relatively high, since the height at which the second partition means project above the second floor remains the same during said vertical movement.

Precisely in order to create the preconditions for having the floor for the sow form part of a standard part having standard dimensions, an important preferred embodiment of the invention is characterised in that at the rear side of the second floor the first floor is provided with a rear floor which abuts with opposite longitudinal edges thereof against facing parts of longitudinal edges of the first floor part and the second floor part and whose width corresponds to the width of the second floor. The dimensions of the rear floor, seen in the longitudinal direction of the second floor for the sow, can at least partially be utilised for bridging the difference in length between the second floor and the first floor. Moreover, the rear floor makes it possible for the piglets to move from the first floor part to the second floor part, also when the second floor is in its upper position.

In view of the position of the rear floor, the rear floor is advantageously suitable for being provided with a manure hatch according to a further preferred embodiment.

For reasons of constructional simplicity and with a view to achieving an easy installation, the rear floor is preferably supported by the first floor part and the second floor part.

In particular for production reasons, it is furthermore preferable if the rear floor is rectangular in shape.

Another important preferred embodiment of the invention is characterised in that at the front side of the second floor the first floor is provided with a front floor which abuts with opposite longitudinal edges thereof against facing parts of longitudinal edges of the first floor part and the second floor part and whose width corresponds to the width of the second floor. As in the case for the rear floor, the dimensions of the front floor can at least partially be utilised for bridging the difference in length between the second floor and the first floor, whilst the front floor provides an additional possibility for the piglets of moving from one floor part to another floor part. A very important additional advantage is the fact that the use of such a front floor ensures that the second floor will be spaced from the circumference of the farrowing device, where in practice generally a wall of the pig house is provided at the front side of the farrowing device. The use of the front floor thus excludes the possibility of the second floor moving close by such a wall with its front side upon moving up and down, in which case more stringent requirements would have to be made as regards the flatness, position and orientation of at least that part of the wall. Meeting said requirements would add to the cost for the pig farmer.

As in the case of the rear floor, it is preferable if the front floor is supported by the first floor part and the second floor part and/or if the front floor is rectangular in shape.

The present invention also relates to a pig house having an aisle, on at least one longitudinal side of which a number of farrowing devices according to the invention are provided, wherein furthermore preferably the first floors associated with the respective farrowing devices abut the aisle.

The present invention also relates to a method for installing a farrowing device according to the invention as described in the foregoing, comprising the steps of
a placing the first floor part in the pig house,
b placing the second floor part in the pig house, whilst keeping open a space having a width equal to the width of the second floor between the first floor part and the second floor part, and
c positioning the second floor between the first floor part and the second floor part after steps a and b, thereby connecting the second floor both to the first floor part and the second floor part so that said second floor will be movable between said lower position and said upper position.

A significant part of the cost reduction that can be achieved by means of the present invention is realised by the manner of installing the farrowing device according to the invention in a pig house.

The level of efficiency of said installation can be achieved in particular if the method according to the invention further comprises the steps of
d installing the first floor parts, the second floor parts and the second floor associated with a number of adjacent farrowing devices according to steps a - c, and
e providing the first partition means between respective adjacent farrowing devices after step d.

The invention will now be explained in more detail by means of a description of the preferred embodiment of the present invention, in which reference is made to the following schematic figures:
Figure 1 is a perspective view of a part of a pig house provided with farrowing devices according to the invention;
Figures 2a and 2b are corresponding perspective views of an individual farrowing device in a lower position and an upper position, respectively;
Figures 3a, 3b and 3c are a perspective view, a vertical cross-sectional view and a vertical longitudinal sectional view, respectively, of a part of the farrowing device in the lower position thereof; and
Figures 4a and 4b are a perspective view and a vertical longitudinal sectional view, respectively, of the farrowing device in the upper position thereof.

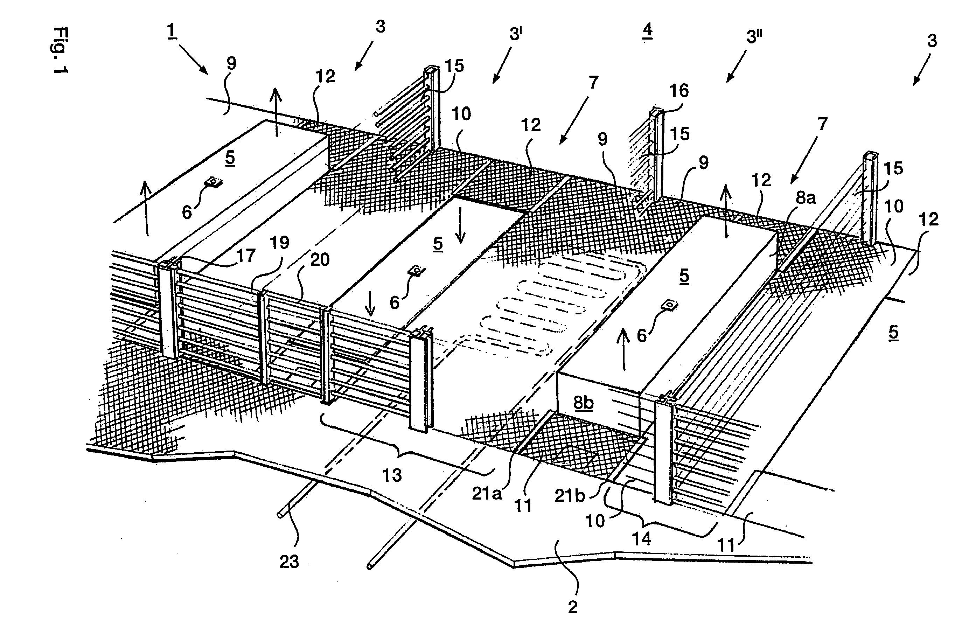

Figure 1 shows a pig house 1 with a central aisle 2. A number of farrowing devices 3 are disposed side by side on either longitudinal side of the aisle 2 in the pig house 1, four of which side-by-side farrowing devices 3 are (partially) shown in figure 1. The farrowing devices 3 join the aisle 2 with their rear sides and the vertical wall 4 of the stable 1 with their front sides. Typical width (parallel to the aisle 2) and length (perpendicular to the aisle 2) dimensions of the farrowing devices 3 are, for example, 170 cm x 250 cm or 180 cm x 240 cm.

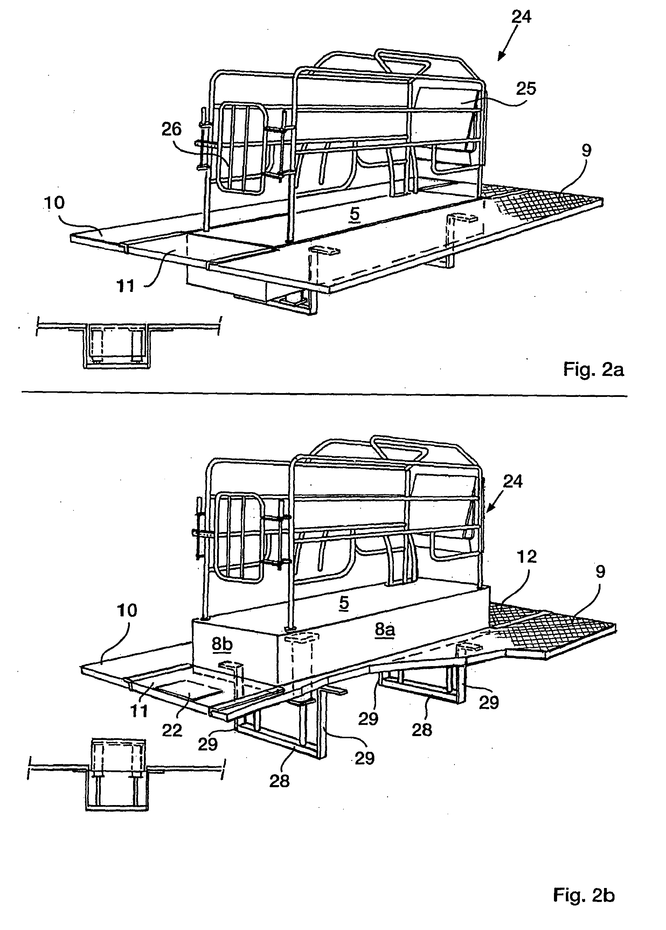

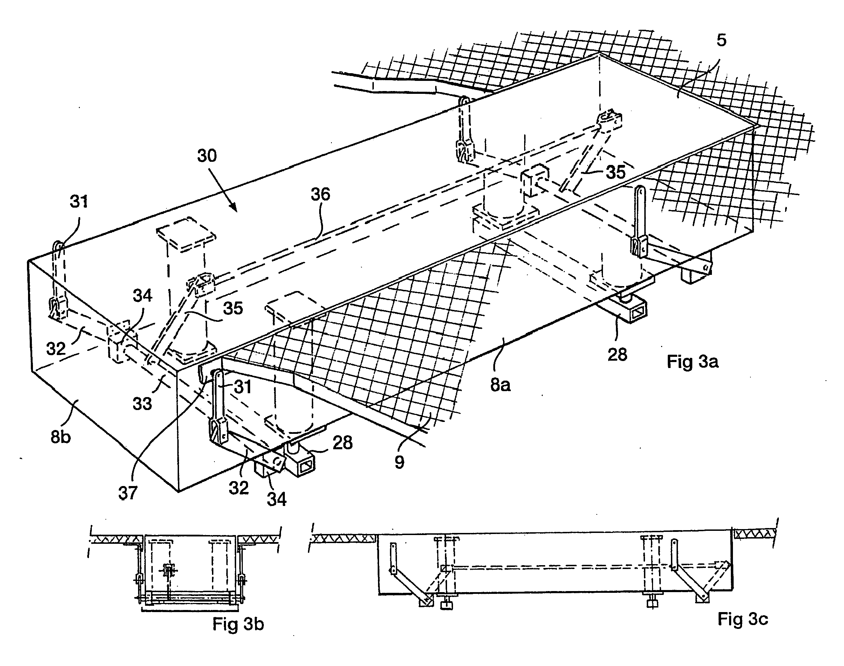

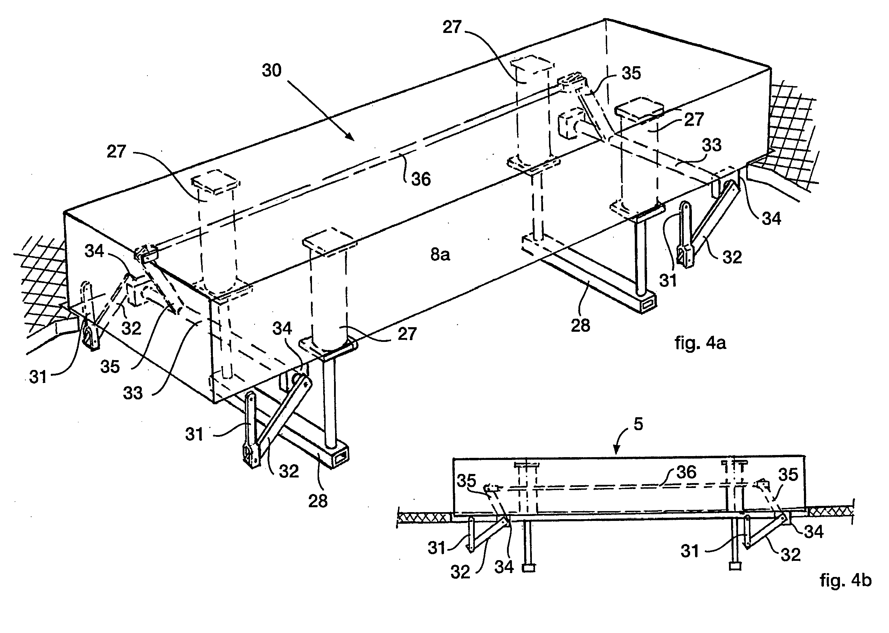

Each farrowing device 3 comprises a floor 5 for a sow. The floor 5 is vertically movable between a lower position, as shown for the farrowing device 3' in figure 1 (see also figures 2a, 3a-3c), and an upper position as shown for the farrowing device 3" in figure 1 (see also figures 2b, 4a, 4b). Using the control button 6 which is provided for each floor 5 and which controls a pneumatic valve, the floor 5 can be made to move to the lower position as soon as a sow lies down on the floor 5 and to the upper position as soon as the sow stands up again. Wall members 8a, 8b join the floor 5 in downward direction at the circumference of the floor 5. The further means for vertically moving floors 5 will be explained in more detail yet in the description of figures 2a-4b. Moving the floor 5 up and down as described above provides significant advantages as regards the risk of piglets being laid on, as is known to those skilled in the art. Reference is made to GB-A-2 026 832 and/or NL-C-1016397 for any background information regarding this.

Each farrowing device 3 further comprises a stationary floor 7 for the sow's piglets. The aforesaid wall members 8a, 8b ensure that there will be no open space between the floor 5 and the floor 7 in the upper position of the floor 5. The floor 7 is made up of a number of floor parts, viz. longitudinal floor parts 9, 10 on both opposite longitudinal sides of the floor 5, a rear floor part 11 at the rear side of the floor 5 and a front floor part 12 at the front side of the floor 5. The longitudinal floor part 9 is wider, for example by a factor of 2, than the longitudinal floor part 10.

Both the longitudinal floor part 9 and the longitudinal floor part 10 associated with a farrowing device 3 abut a corresponding longitudinal floor part 9, 10 of an adjacent farrowing device 3, even forming an integral whole therewith. Two longitudinal floor parts 9 of adjacent farrowing devices 3 form part of an integral floor part 13, whilst two longitudinal floor parts 10 of adjacent farrowing devices 3 form part of an integral floor part 14. Longitudinal fences 15 are provided above the centre of the width of said integral floor parts 13, 14, which fences separate adjacent farrowing devices 3 from each other, so that sows cannot walk from one of farrowing device 3 to an adjacent farrowing device 3. The longitudinal fences 15 are inserted from above into a U-shaped section 16 fixed to the wall 4 of the pig house 1 and into a U-shaped section 17 forming part of a T-shaped column 18 (at the location of the vertical part of the T-shape) that is provided on the side of the aisle 2. A cross fence 19 provided with a gate 20 is disposed between two facing U-shaped sections, parallel to the aisle 2, at the location of the horizontal legs of adjacent T-shaped columns. Each farrowing device 3 is thus surrounded by two opposite longitudinal fences 15, a cross fence 19 and a wall 4. Because of the shape of the floor 7 surrounding the floor 5, the circumference of the floor 5 is spaced from said means, so that it will not interfere with the vertical movement of the floor 5.

In the preferred embodiments as described so far, adjacent farrowing devices are mirror-symmetrical to each other. Alternatively, it is also conceivable for the farrowing devices to be identical to each other. In that case an integral floor part would be formed by a longitudinal floor part 9 associated with a particular farrowing device 3 and a longitudinal floor part 10 associated with an adjacent farrowing device. The advantage of that variant would be that identical integral floor parts could be used for the entire pig house in question.

The integral floor parts 13 and 14 are supported with their opposite transverse edges on support edges (not shown) at the location of the aisle 2 on the one hand and the wall 4 on the other hand. At opposite edges thereof, the floor parts 11, 12 are provided with outwardly oriented angle sections 21 a, 21 b, via which they are supported on part of the longitudinal edges of the slightly spaced-apart, adjacent integral floor parts 13 and 14. The sum of the dimensions of the floor parts 11, 12 and of the floor 5 equals the length of the longitudinal floor parts 9 and 10 or the length of the integral floor parts 11, 12.

As is subsequently shown in figure 2b, the rear floor parts 11 are provided with a manure hatch 22, through which the sow's manure can be discharged to the space under the floor.

The integral floor parts 13, 14 are provided with a heating pipe 23 on their underside, which heating pipe extends in zigzag fashion under part of the area of the two longitudinal floor parts 9 associated with the integral floor part 13 in question, so that piglets can be warmed on both longitudinal floor parts 9 by means of the heating pipe 23, which is a common heating pipe for the two longitudinal members 9, therefore.

As figures 2a and 2b show, a cage construction 24 is provided along the circumference of each floor 5, which cage construction can jointly move up and down with the floor 5. The cage construction 24, which comprises a trough 25 and a gate 26, functions to prevent the sow present within the cage construction 24 from moving onto the floor 7 for the piglets.

To effect the vertical movement of the floor 5, four pneumatic cylinder means 27 are provided under the floor 5, near the corner points thereof, with only figure 4a showing all four cylinder means 27. The cylinder means 27 act between a girder 28 and the underside of the floor 5. Such a girder 28 is provided both at the rear side and at the front side, one girder for two cylinder means 27. Via vertical strips 29 provided at the ends of the girders 28, the girders are rigidly connected to the respective longitudinal floor parts 9, 10. The cylinder means 27 are of the single-acting type. When the sow actuates a control button 6 when lying down, air is admitted into the cylinder means 27, as a result of which the floor 5 is moved from the lower position (figure 2a) to the upper position (figure 2b).

To prevent the floor 5 from slanting together with the walls 8a, 8b during said movement, which might result in the floor 5 getting jammed, for example in a situation in which the sow would lie down relatively far to the front or to the rear, a parallel mechanism is provided, which parallel mechanism will be explained in more detail with reference to figures 3a-4b. The parallel mechanism 30 is a linkage which interconnects the front side and the rear side of the floor 5 and which ensures that vertical movements of the floor 5 at said front and rear side will take place synchronously. The parallel mechanism 30 comprises pivotally interconnected rods 31, 32 near each corner point of the floor 5. The rod 31 is pivotally connected with one end thereof to the longitudinal floor part 9, 10 located on the side in question. A swivel axle 33 is provided between opposite ends of the rods 32, which swivel axle is rigidly connected with its ends to the rods 32 in question. The swivel axle 33 is mounted in bearings 34 near the rods 32, which bearings are fixed to the lower longitudinal edges of the associated opposite longitudinal walls 8a. A further rod 35 is rigidly connected to the swivel axle 33 between the bearings 34 and also between the opposite longitudinal walls 8a. The rods 35, which are provided at the front side and at the rear side of each floor 5, are further interconnected via a connecting rod 36, which ensures that vertical movements at the front side and the rear side of the floor 5 will take place synchronously.

An important additional advantage that is obtained by using the swivel axles 33 is that in the upper position they will abut against the underside of a longitudinal floor part 9, 10 in the region between a bearing 34 and a rod 32, for example with the longitudinal girder 37, which is provided at the circumference of the integral floor part 13 of which the longitudinal floor part 9 forms part, thereby locking the floor 5 in the upper position to a certain extent. As a result, the floor 5 exhibits a highly stable behaviour in said upper position, in spite of the considerable weight of a sow present on the floor.

An important advantage of farrowing devices 3 is that the floor 5, including the associated devices for moving the floor 5 up and down, can be configured as a standard component having fixed dimensions. Such fixed dimensions may be a width of 70 cm and a length of 90 cm, for example. By adapting the dimensions of the floor parts 9-12 of the floor 7 to the environment in which the farrowing devices 3 are to be installed, which is significantly simpler and cheaper than adapting the dimensions of the floor 5, the farrowing devices 3 can be adapted for use in the environment in question. The floor 5, including the aforesaid devices, can be produced in large numbers as a standard component at relatively low cost.

The installation of farrowing devices 3 in a big house 1 can take place in a highly efficient manner by first placing the integral floor parts 13, 14 in alternating relationship on the aforesaid support edges above a manure pit between the aisle 2 and the wall 4 in the pig house 1, maintaining a spacing equal to the width of the floor 5 between adjacent integral floor parts 13, 14. Following that, the floors 5, including the associated devices, can be installed. For each farrowing device 3, four rods 31 must be pivotally connected to floor parts, more specifically two adjacent integral floor parts 13, 14, and the girder 28 must be connected to the respective floor parts 9, 10 via vertical strips. Furthermore, the cylinder means 27 must be pneumatically connected, of course, whilst also the heating pipes 23 must be connected. With all these operations it should be realised that the floor 5 may actually consist of a number of floor parts, i.e. it need not be one unit, and is moreover supported on the upper longitudinal edges of the walls 8a, 8b, making it possible to (partially) remove the floor temporarily so as to be able to gain easy access to the space thereunder. Furthermore, the rear floor parts 11 and the front floor parts 12 must be placed. After the placement of the integral floor parts 13, 14, and preferably also after the placement of the floor 5, the longitudinal fences 15 and the cross fences 19 are provided, as well as the cage construction 24.

Although the invention has been explained on the basis of a preferred embodiment of the invention in the foregoing, it should be understood that the scope of the invention is not limited to this preferred embodiment, but that it is in the first place determined by the appended claims.

## Claims

1. A farrowing device for a sow with piglets, comprising a first stationary floor for piglets and a second floor for a sow, which second floor is movable between a lower position and an upper position, in which lower position the second floor is in line with the first floor, said first stationary floor comprising a first floor part on a first longitudinal side of the second floor and a second floor part on a second longitudinal side opposite said first longitudinal side, first partition means at the circumference of the farrowing device, above the first floor, and second partition means at the circumference of the second floor, above the second floor, **characterised in that** the first floor part and the second floor part are separate parts, wherein the second floor, upon movement from the lower position to the upper position, pushes off both against the first floor part and against the second floor part.

2. A farrowing device according to claim 1, **characterised in that** the first floor part and the second floor part have the same length but different widths.

3. A farrowing device according to any one of the preceding claims, **characterised in that** the first floor part and/or the second floor part form part of an integral floor part, of which also a first floor part and/or a second-floor part associated with an adjacent farrowing device forms part.

4. A farrowing device according to claim 3, **characterised in that** a partition forming part of the first partition means is provided above the centre of the width of the integral floor part for separating the farrowing device and the adjacent farrowing device from each other.

5. A farrowing device according to any one of the preceding claims, **characterised in that** the first floor part or the second-floor part is provided with heating means for heating part of the surface of either said first or said second floor part.

6. A farrowing device according to claim 4 and claim 5, **characterised in that** said heating means comprise a heating pipe on the underside of the first floor part or the second floor part in question, which heating pipe also extends under the underside of the first floor part or a second floor part associated with the adjacent farrowing device.

7. A farrowing device according to any one of the preceding claims, **characterised in that** the second partition means are jointly movable between said lower position and said upper position with the second-floor.

8. A farrowing device according to any one of the preceding claims, **characterised in that** at the rear side of the second floor the first floor is provided with a rear floor which abuts with opposite longitudinal edges thereof against facing parts of longitudinal edges of the first floor part and the second floor part and whose width corresponds to the width of the second floor.

9. A farrowing device according to claim 8, **characterised in that** the rear floor is supported by the first floor part and the second floor part.

10. A farrowing device according to any one of the preceding claims, **characterised in that** at the front side of the second floor the first floor is provided with a front floor which abuts with opposite longitudinal edges thereof against facing parts of longitudinal edges of the first floor part and the second floor part and whose width corresponds to the width of the second floor.

11. A farrowing device according to claim 10, **characterised in that** the front floor is supported by the first floor part and the second floor part.

12. A pig house having an aisle, on at least one longitudinal side of which a number of farrowing devices according to any one of the preceding claims are provided.

13. A pig house according to claim 12, **characterised in that** the first floors associated with the respective farrowing devices abut the aisle.

14. A method for installing a farrowing device according to any one of the claims 1-11 in a pig house, comprising the steps of
a placing the first floor part in the pig house,
b placing the second floor part in the pig house, whilst keeping open a space having a width equal to the width of the second floor between the first floor part and the second floor part, and
c positioning the second floor between the first floor part and the second floor part after steps a and b, thereby connecting the second floor both to the first floor part and the second floor part so that said second floor will be movable between said lower position and said upper position.

15. A method according to claim 14, **characterised by** the steps of
d installing the first floor parts, the second floor parts and the second floor associated with a number of adjacent farrowing devices according to steps a - c, and
e providing the first partition means between respective adjacent farrowing devices after step d.
